# EUROPEAN PATENT SPECIFICATION

(11) **EP 2 818 628 B1**
(45) Date of publication and mention of the grant of the patent: **15.05.2019**
(21) Application number: 14174044.9
(22) Date of filing: 26.06.2014
(51) Int. Cl.: G01N 15/08, E21B 33/035, E21B 47/06

(54) **Monitoring a hydraulic fluid filter**
Überwachung eines hydraulischen Flüssigkeitsfilters
Surveillance d'un filtre de fluide hydraulique

(30) Priority: 27.06.2013 GB 201311407
(43) Date of publication of application: 31.12.2014
(73) Proprietor: GE Oil & Gas UK Limited, Nailsea Bristol BS48 1BS (GB)
(72) Inventor: Kent, Ian John, Nailsea, North Somerset BS48 1BS (GB)
(74) Representative: Illingworth-Law, William Illingworth

(56) References cited:
- DE-A1-102008 027 664
- US-A1- 2008 196 943
- US-A1- 2010 161 250

## Description

### Field of the Invention

This invention relates to monitoring a hydraulic fluid filter, in particular such a filter in an underwater (for example subsea) well control system.

### Background of the Invention

An offshore hydrocarbon well control is disclosed in US2010161250. In offshore hydrocarbon well control systems, the main equipment of a typical system configuration includes:
a master control station, which provides the operator interface with subsea equipment and displays the current state of various subsurface equipment, subsea valves and sensor information enabling the operator to control the system;
an umbilical cable, which connects the master control station to the equipment installed on the seabed and incorporates a communication link which carries control signals to the subsurface equipment and transfers information on the status of the subsurface equipment to the master control station;
a subsea control module, which receives commands from the master control station and controls subsea processes, provides the hydraulic power to actuate valves and transmits status data on subsea equipment and sensor data to the master control station;
a subsea electronics module, housed within the subsea control module and which typically is a microprocessor based electronics unit that houses a set of printed circuit boards, the functions of which include communication with the master control station (receiving control information from, and transmitting sensor data to, the master control station), interfacing with subsurface sensors and controlling valves and hydraulics; and
a tree installed on the seabed, to which is fitted the subsurface electric and hydraulic equipment needed to control the flow of fluids from or to the well together with a sensor pack, to determine the state of the tree equipment, well head components and fluid flowing from or to the well.

Hydraulic fluid is supplied to a subsea control module in a redundant manner in order to provide power for operating the hydraulic valves located on subsea trees and manifolds.

In order to remove particulate matter from the fluid, the fluid is passed through filters. Pressure transducers are normally located downstream of the filters for monitoring the incoming pressure of the fluid, and then selector valves allow the operator to select which of the redundant supplies is used for valve operation. The selected fluid is then used as a common supply for operations within the subsea control module, and a pressure transducer is used to monitor this supply pressure.

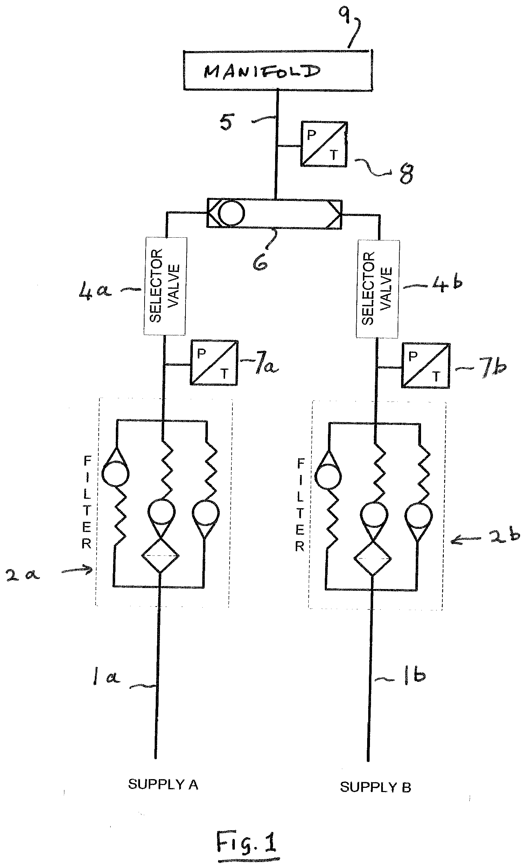

Fig. 1 shows a typical schematic for one of the supplies to a subsea control module. Hydraulic fluid is supplied in a redundant manner from supplies A and B via inputs 1a and 1b and each incoming supply is filtered to remove particulate matter by a respective one of filters 2a and 2b. Then the fluid is passed to respective ones of selector valves 4a and 4b, enabling supply selection to be performed, and a common supply to an output 5 is provided via a shuttle valve 6. The pressure of hydraulic fluid downstream of the filters is monitored by respective ones of pressure transducers 7a and 7b and the pressure of the common supply is monitored downstream of the shuttle valve 6 by a pressure transducer 8. The common supply from output 5 is fed to a manifold 9 within the subsea control module.

With this configuration of transducers and filters, there is no method to monitor the health (contamination levels) and hence life of the filters.

If there is no method for assessing the contamination of such filters when a subsea control module is deployed and the subsea control module is operated until problems are experienced, if the filters become blocked, this could result in the well being shut in, and cause lack of hydrocarbon production for a period of time until the module can be recovered and a replacement installed.

### Summary of the Invention

According to this invention from one aspect, there is provided a hydraulic circuit for supplying hydraulic fluid to a subsea control module of a control system for an underwater hydrocarbon well, comprising:
an input for hydraulic fluid;
a filter connected to the input for filtering hydraulic fluid from the input;
an output for supplying hydraulic fluid from the filter to the subsea control module;
first sensing means for sensing pressure of hydraulic fluid from the input upstream of the filter;
second sensing means for sensing pressure of hydraulic fluid downstream of the filter; and
a subsea electronics module in the subsea control module, the subsea electronics module being coupled with the first and second sensing means and being adapted to produce an indication related to a hydraulic fluid pressure differential across the filter.

There could be at least one further such subsea electronics module in the subsea control module for redundancy purposes, the or each further subsea electronics module also being coupled with the first and second sensing means.

Typically, the circuit includes:
a further input for hydraulic fluid and a further filter, connected to the further input for filtering hydraulic fluid from the further input, the output being connected for use in supplying hydraulic fluid from the further filter to the subsea control module;
means for selecting whether the output supplies hydraulic fluid to the subsea control module from the first or the further filter; and
further such first sensing means, for sensing pressure of hydraulic fluid from the further input upstream of the further filter, the second sensing means sensing pressure of hydraulic fluid downstream of the further filter, the or each subsea electronics module being coupled with the further such first sensing means and being adapted to produce an indication related to a hydraulic fluid pressure differential across that one of the first and further filters which is supplying fluid to the output.

In this case, the first and further such first sensing means could comprise respective ones of transducers between the first and further filters and the first and further inputs.

The second sensing means could comprise a transducer between such selecting means and the output. Alternatively, the second sensing means could comprise respective ones of transducers between outputs of the first and further filters and such selecting means.

According to this invention from another aspect, there is provided a method of monitoring a filter in a hydraulic circuit for supplying hydraulic fluid to a subsea control module of a control system for an underwater hydrocarbon well, the circuit comprising: an input for hydraulic fluid; a filter connected to the input for filtering hydraulic fluid from the input; and an output for supplying hydraulic fluid from the filter to the subsea control module, wherein the method comprises:
sensing pressure of hydraulic fluid from the input upstream of the filter;
sensing pressure of hydraulic fluid downstream of the filter; and
using software algorithms within a subsea electronics module in the subsea control module to produce an indication related to a hydraulic fluid pressure differential across the filter, the subsea electronics module being coupled with the first and second sensing means.

Typically, the circuit includes a further input for hydraulic fluid and a further filter, connected to the further input for filtering hydraulic fluid from the further input, the output being connected for use in supplying hydraulic fluid from the further filter to the subsea control module, the method comprising:
selecting whether the output supplies hydraulic fluid to the subsea control module from the first or the further filter; and
sensing pressure of hydraulic fluid upstream of the filter supplying hydraulic fluid to the output and sensing pressure of hydraulic fluid downstream of the that filter, the subsea electronics module being adapted to produce an indication related to a hydraulic fluid pressure differential across that one of the first and further filters which is supplying hydraulic fluid to the output.

By evaluating the rate of change of differential pressure over time, predictive maintenance may be performed.

### Brief Description of the Drawings

Fig. 1 is a schematic diagram of a known form of hydraulic fluid supply circuit for a subsea control module;
Fig. 2 is a schematic diagram of a first embodiment of a hydraulic fluid supply circuit for a subsea control module according to the invention; and
Fig. 3 is a schematic diagram of a second embodiment of a hydraulic fluid supply circuit for a subsea control module according to the invention.

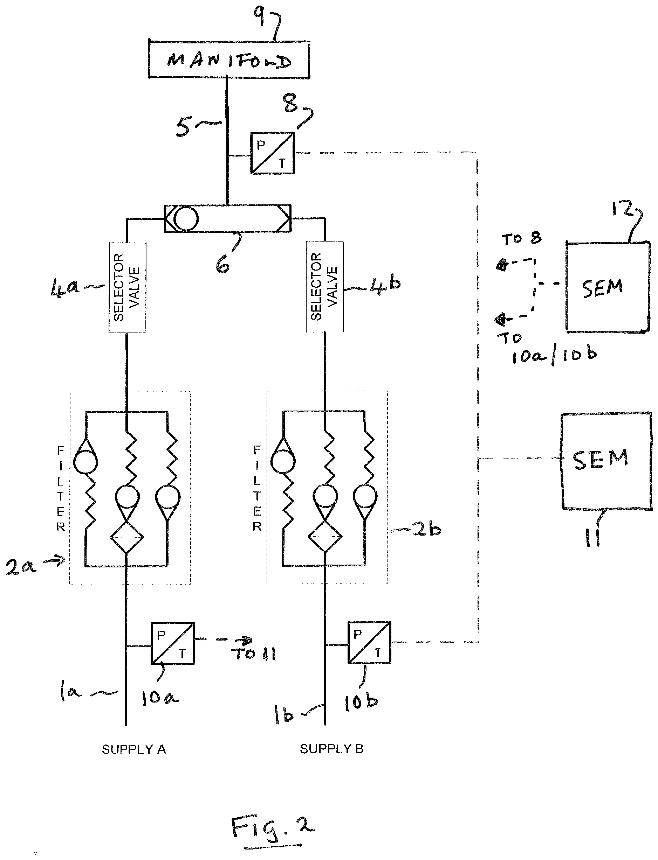

If the hydraulic circuit of Fig. 1 is modified such that the pressure transducers monitoring the incoming supplies are located upstream of the filters, then a method of implying the contamination levels of the filters may be realised. This configuration is shown in Fig. 2, in which items which correspond with items in Fig. 1 have the same reference numerals as in Fig. 1.

In Fig. 2, pressure transducers 7a and 7b have been omitted, the input supplies of filters 2a and 2b are monitored by respective ones of upstream pressure transducers 10a and 10b, and transducer 8 and transducers 10a and 10b are coupled with a subsea electronics module (SEM) 11 in the subsea control module.

With the hydraulic circuit modified as per Fig. 2, by monitoring the differential pressure (using subsea electronics module 11) between the transducer 8 downstream of the shuttle valve 6, and the pressure upstream of that filter whose output is selected (as sensed by the respective one of transducers 10a and 10b), the contamination level of that filter may be estimated.

Filter health monitoring using differential pressure sensing is known using a dedicated physical differential pressure sensor across the filter. However, this application uses normal pressure transducers which can exist in the circuit, and software algorithms in the subsea electronics module to implement an active monitoring system. The subsea electronics module software is configured to monitor the hydraulic pressure transducer 8 downstream of the shuttle valve and the hydraulic pressure transducer 10a or 10b upstream of the filter synchronously so that their digitised signals represent the pressures at the same point in time. By then subtracting the downstream pressure from the upstream pressure, a virtual differential pressure sensor is realised. As the differential pressure function is calculated through software, other calibration factors may be applied such as correcting for incoming supply pressure fluctuations.

As a filter becomes blocked, the differential pressure across it becomes higher. Since in use of the hydraulic circuit, flow is only sporadic (during and after valve operations), when the system is in steady state, no differential would exist, so the software within the subsea electronics module is configured to monitor the peak differential pressure during each active period. When the differential pressure exceeds a threshold during a period of fluid flow, an alarm can be raised, thus alerting the operator of a potential blockage within the filter.

It should be noted from Fig. 2 that there are other components than filters in the flow path between each input and the output (selector valves and shuttle valve). These components may affect flow, and as such affect the differential pressure measured. However these devices can be considered constants, and their effect zeroed out of the calculated differential pressure through taking baseline readings when the filter is known to be clean.

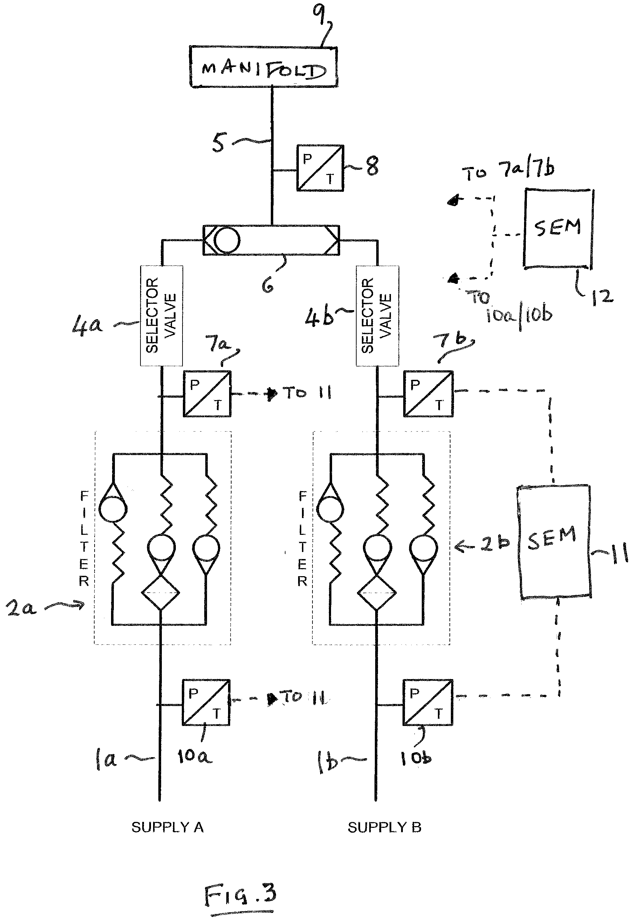

A further improvement of the hydraulic circuit (at the expense of additional pressure transducers) may be realised as shown in Fig. 3, in which items which correspond with those in Figs. 1 and 2 have the same reference numerals as in Figs. 1 and 2. In Fig. 3, transducers 7a or 7b are included, the subsea electronics module 11 monitoring the pressure differential between transducer 7a or 7b and transducer 10a or 10b as the case may be, depending on which of filters 2a and 2b is supplying hydraulic fluid to the output 5.

This configuration allows absolute monitoring of the filters without the potential for differential pressure inaccuracy due to the other components in the flow path.

In each of the embodiments of Figs. 2 and 3 at least one further such subsea electronics module 12 could be included in the subsea control module for redundancy purposes, one of them being used as appropriate.

The or each further module 12 is coupled with transducers 8 and 10a and 10b in the case of Fig. 2 and with transducers 7a and 7b and 10a and 10b in the case of Fig. 3.

As the differential pressure that will be monitored is an analogue reading, over time a rate of change can therefore be determined. This rate of change can then be used to predict when maintenance and intervention may be required.

The invention enables the contamination levels of the filters within a subsea control module to be assessed whilst the module is in operation, enables the operator to be alerted of contamination, and enables maintenance of the module to be scheduled

If a method of assessing the contamination level within the filters during operation can be implemented, then subsea control module operation may be optimised, or preventative maintenance planned thus alleviating unscheduled shutdowns and loss of production.

By adding little specific hardware into the subsea control module, a predictive method for identifying progressive contamination of hydraulic filters can be achieved.

This will allow enhanced subsea control module prognostics, and planning predictive replacement of such a module in the event of filter contamination.

## Claims

1. A hydraulic circuit for supplying hydraulic fluid to a subsea control module of a control system for an underwater hydrocarbon well, comprising:
an input (1a) for hydraulic fluid;
a filter (2a) connected to the input for filtering hydraulic fluid from the input;
an output (5) for supplying hydraulic fluid from the filter to the subsea control module;
first sensing means (10a) for sensing pressure of hydraulic fluid from the input upstream of the filter;
second sensing means (7a) for sensing pressure of hydraulic fluid downstream of the filter at the output of the filter; and
a subsea electronics module (11) in the subsea control module, the subsea electronics module being coupled with the first and second sensing means and being adapted to produce an indication related to a hydraulic fluid pressure differential across the filter.

2. A circuit according to claim 1, wherein there is at least one further such subsea electronics module (11) in the subsea control module for redundancy purposes, the or each further subsea electronics module also being coupled with the first (10a) and second (7a) sensing means.

3. A circuit according to claim 1 or 2, including:
a further input (1b) for hydraulic fluid and a further filter (2b), connected to the further input for filtering hydraulic fluid from the further input, the output being connected for use in supplying hydraulic fluid from the further filter to the subsea control module (11);
means (6) for selecting whether the output of the hydraulic circuit supplies hydraulic fluid to the subsea control module from the first (2a) or the further (2b) filter; and
further such first sensing means (10b), for sensing pressure of hydraulic fluid from the further input upstream of the further filter (2b), further second sensing means (7b) sensing pressure of hydraulic fluid downstream of the further filter at the output of the filter, the or each subsea electronics module (11) being coupled with the further such first sensing means and being adapted to produce an indication related to a hydraulic fluid pressure differential across that one of the first and further filters which is supplying fluid to the output.

4. A circuit according to claim 3, wherein the first and further such first sensing means comprise respective ones of transducers between the first and further filters and the first and further inputs.

5. A circuit according to any preceding claim, wherein the second sensing means comprises a transducer between the selecting means (6) and the output (5).

6. A circuit according to any preceding claim, wherein the second sensing means (7a, 7b) comprises respective ones of transducers between outputs of the first and further filters and the selecting means.

7. A method of monitoring a filter in a hydraulic circuit for supplying hydraulic fluid to a subsea control module of a control system for an underwater hydrocarbon well, the circuit comprising: an input for hydraulic fluid; a filter connected with the input for filtering hydraulic fluid from the input; and an output for supplying hydraulic fluid from the filter to the subsea control module, wherein the method comprises:
sensing pressure of hydraulic fluid from the input upstream of the filter;
sensing pressure of hydraulic fluid downstream of the filter at the output of the filter; and
using software algorithms within a subsea electronics module in the subsea control module to produce an indication related to a hydraulic fluid pressure differential across the filter, the subsea electronics module being coupled with the first and second sensing means.

8. A method according to claim 7, wherein the circuit includes a further input for hydraulic fluid and a further filter connected to the further input for filtering hydraulic fluid from the further input, the output of the further filter being connected for use in supplying hydraulic fluid from the further filter to the subsea control module, the method comprising:
selecting whether the output of the hydraulic circuit supplies hydraulic fluid to the subsea control module from the first or the further filter; and
sensing pressure of hydraulic fluid upstream of the filter supplying hydraulic fluid to the output and sensing pressure of hydraulic fluid downstream of that filter, at the output of the filter the subsea electronics module being adapted to produce an indication related to a hydraulic fluid pressure differential across that one of the first and further filters which is supplying hydraulic fluid to the output.

## Patentansprüche

1. Hydraulikkreislauf zum Zuführen von Hydraulikflüssigkeit zu einem Unterwassersteuermodul eines Steuersystems für eine Unterwasserkohlenwasserstoffbohrung, umfassend:
einen Einlass (1a) für Hydraulikflüssigkeit;
einen mit dem Einlass verbundenen Filter (2a) zum Filtern von Hydraulikflüssigkeit aus dem Einlass;
einen Auslass (5) zum Zuführen von Hydraulikflüssigkeit aus dem Filter zu dem Unterwassersteuermodul;
erste Erfassungsmittel (10a) zum Erfassen des Drucks von Hydraulikflüssigkeit aus dem Einlass stromaufwärts des Filters;
zweite Erfassungsmittel (7a) zum Erfassen des Drucks von Hydraulikflüssigkeit stromabwärts des Filters an dem Auslass des Filters; und
ein Unterwasserelektronikmodul (11) in dem Unterwassersteuermodul, wobei das Unterwasserelektronikmodul mit den ersten und zweiten Erfassungsmitteln gekoppelt und angepasst ist, um eine Anzeige in Bezug auf eine Hydraulikflüssigkeitsdruckdifferenz über den Filter zu erzeugen.

2. Kreislauf nach Anspruch 1, wobei es mindestens ein weiteres solches Unterwasserelektronikmodul (11) in dem Unterwassersteuermodul für Redundanzzwecke gibt, wobei das oder jedes weitere Unterwasserelektronikmodul auch mit den ersten (10a) und zweiten (7a) Erfassungsmitteln gekoppelt ist.

3. Kreislauf nach Anspruch 1 oder 2, aufweisend:
einen weiteren Einlass (1b) für Hydraulikflüssigkeit und einen weiteren Filter (2b), der mit dem weiteren Einlass verbunden ist, um Hydraulikflüssigkeit aus dem weiteren Einlass zu filtern, wobei der Auslass zur Verwendung beim Zuführen von Hydraulikflüssigkeit aus dem weiteren Filter mit dem Unterwassersteuermodul (11) verbunden ist;
Mittel (6) zum Auswählen, ob der Auslass des Hydraulikkreislaufs dem Unterwassersteuermodul Hydraulikflüssigkeit von dem ersten (2a) oder dem weiteren (2b) Filter zuführt; und
weitere solche ersten Erfassungsmittel (10b) zum Erfassen des Drucks von Hydraulikflüssigkeit aus dem weiteren Einlass stromaufwärts des weiteren Filters (2b), weitere zweite Erfassungsmittel (7b), die den Druck von Hydraulikflüssigkeit stromabwärts des weiteren Filters an dem Auslass des Filters erfassen, wobei das oder jedes Unterwasserelektronikmodul (11) mit den weiteren solchen ersten Erfassungsmitteln gekoppelt ist und angepasst ist, um eine Anzeige in Bezug auf eine Hydraulikflüssigkeitsdruckdifferenz über den einen von dem ersten und dem weiteren Filter, der dem Auslass Flüssigkeit zuführt, zu erzeugen.

4. Kreislauf nach Anspruch 3, wobei die ersten und weiteren solchen ersten Erfassungsmittel entsprechende Wandler zwischen den ersten und weiteren Filtern und den ersten und weiteren Einlässen umfassen.

5. Kreislauf nach einem vorstehenden Anspruch, wobei die zweiten Erfassungsmittel einen Wandler zwischen den Auswahlmitteln (6) und dem Auslass (5) umfassen.

6. Kreislauf nach einem vorstehenden Anspruch, wobei die zweiten Erfassungsmittel (7a, 7b) entsprechende Wandler zwischen Auslässen der ersten und weiteren Filter und den Auswahlmitteln umfassen.

7. Verfahren zum Überwachen eines Filters in einem Hydraulikkreislauf zum Zuführen von Hydraulikflüssigkeit zu einem Unterwassersteuermodul eines Steuersystems für eine Unterwasserkohlenwasserstoffbohrung, wobei der Kreislauf umfasst: einen Einlass für Hydraulikflüssigkeit; einen mit dem Einlass verbundenen Filter zum Filtern von Hydraulikflüssigkeit aus dem Einlass; und einen Auslass zum Zuführen von Hydraulikflüssigkeit aus dem Filter zu dem Unterwassersteuermodul, wobei das Verfahren umfasst:
Erfassen des Drucks von Hydraulikflüssigkeit aus dem Einlass stromaufwärts des Filters;
Erfassen des Drucks von Hydraulikflüssigkeit stromabwärts des Filters an dem Auslass des Filters; und
Verwenden von Softwarealgorithmen innerhalb eines Unterwasserelektronikmoduls in dem Unterwassersteuermodul, um eine Anzeige in Bezug auf eine Hydraulikflüssigkeitsdruckdifferenz über den Filter zu erzeugen, wobei das Unterwasserelektronikmodul mit den ersten und zweiten Erfassungsmitteln gekoppelt ist.

8. Verfahren nach Anspruch 7, wobei der Kreislauf einen weiteren Einlass für Hydraulikflüssigkeit und einen mit dem weiteren Einlass verbundenen weiteren Filter zum Filtern von Hydraulikflüssigkeit aus dem weiteren Einlass aufweist, wobei der Auslass des weiteren Filters zur Verwendung beim Zuführen von Hydraulikflüssigkeit aus dem weiteren Filter mit dem Unterwassersteuermodul verbunden ist, wobei das Verfahren umfasst:
Auswählen, ob der Auslass des Hydraulikkreislaufs dem Unterwassersteuermodul Hydraulikflüssigkeit aus dem ersten oder dem weiteren Filter zuführt; und
Erfassen des Drucks von Hydraulikflüssigkeit stromaufwärts des Filters, der dem Auslass Hydraulikflüssigkeit zuführt, und Erfassen des Drucks von Hydraulikflüssigkeit stromabwärts dieses Filters, wobei an dem Auslass des Filters das Unterwasserelektronikmodul angepasst ist um eine Anzeige in Bezug auf eine Hydraulikflüssigkeitsdruckdifferenz über diesen einen von dem ersten und dem weiteren Filter, der dem Auslass Hydraulikflüssigkeit zuführt, zu erzeugen.

## Revendications

1. Circuit hydraulique pour fournir un fluide hydraulique à un module de commande subaquatique d'un système de commande pour un puits d'hydrocarbure sous-marin, comprenant :
une entrée (1a) de fluide hydraulique ;
un filtre (2a) raccordé à l'entrée pour filtrer un fluide hydraulique provenant de l'entrée ;
une sortie (5) pour fournir un fluide hydraulique provenant du filtre au module de commande subaquatique ;
un premier moyen de détection (10a) pour détecter une pression de fluide hydraulique provenant de l'entrée en amont du filtre ;
un second moyen de détection (7a) pour détecter une pression de fluide hydraulique en aval du filtre au niveau de la sortie du filtre ; et
un module électronique subaquatique (11) dans le module de commande subaquatique, le module électronique subaquatique étant couplé aux premier et second moyens de détection et étant adapté pour produire une indication liée à un différentiel de pression de fluide hydraulique à travers le filtre.

2. Circuit selon la revendication 1, dans lequel il y a au moins un tel module électronique subaquatique supplémentaire (11) dans le module de commande subaquatique à des fins de redondance, le ou chaque module électronique subaquatique étant également couplé aux premier (10a) et second (7a) moyens de détection.

3. Circuit selon la revendication 1 ou 2, comportant :
une entrée supplémentaire (1b) de fluide hydraulique et un filtre supplémentaire (2b), raccordé à l'entrée supplémentaire pour filtrer un fluide hydraulique provenant de l'entrée supplémentaire, la sortie étant raccordée pour être utilisée pour fournir un fluide hydraulique provenant du filtre supplémentaire au module de commande subaquatique (11) ;
un moyen (6) pour sélectionner si la sortie du circuit hydraulique fournit un fluide hydraulique au module de commande subaquatique depuis le premier filtre (2a) ou le filtre supplémentaire (2b) ; et
un tel premier moyen de détection supplémentaire (10b), pour détecter une pression de fluide hydraulique provenant de l'entrée supplémentaire en amont du filtre supplémentaire (2b), un second moyen de détection supplémentaire (7b) détectant une pression de fluide hydraulique en aval du filtre supplémentaire au niveau de la sortie du filtre, le ou chaque module électronique subaquatique (11) étant couplé au tel premier moyen de détection supplémentaire et étant adapté pour produire une indication liée à un différentiel de pression de fluide hydraulique à travers celui du premier filtre et du filtre supplémentaire qui fournit le fluide à la sortie.

4. Circuit selon la revendication 3, dans lequel le premier moyen de détection et ce tel premier moyen de détection supplémentaire comprennent des transducteurs respectifs entre le premier filtre et le filtre supplémentaire et la première entrée et l'entrée supplémentaire.

5. Circuit selon l'une quelconque des revendications précédentes, dans lequel le second moyen de détection comprend un transducteur entre le moyen de sélection (6) et la sortie (5).

6. Circuit selon l'une quelconque des revendications précédentes, dans lequel le second moyen de détection (7a, 7b) comprend des transducteurs respectifs entre des sorties du premier filtre et du filtre supplémentaire et le moyen de sélection.

7. Procédé de surveillance d'un filtre dans un circuit hydraulique pour fournir un fluide hydraulique à un module de commande subaquatique d'un système de commande pour un puits d'hydrocarbure sous-marin, le circuit comprenant : une entrée de fluide hydraulique; un filtre raccordé à l'entrée pour filtrer un fluide hydraulique provenant de l'entrée ; et une sortie pour fournir un fluide hydraulique provenant du filtre au module de commande subaquatique, dans lequel le procédé comprend :
la détection d'une pression de fluide hydraulique provenant de l'entrée en amont du filtre ;
la détection d'une pression de fluide hydraulique en aval du filtre au niveau de la sortie du filtre ; et
l'utilisation d'algorithmes logiciels au sein d'un module électronique subaquatique dans le module de commande subaquatique pour produire une indication liée à un différentiel de pression de fluide hydraulique à travers le filtre, le module électronique subaquatique étant couplé aux premier et second moyens de détection.

8. Procédé selon la revendication 7, dans lequel le circuit comporte une entrée supplémentaire de fluide hydraulique et un filtre supplémentaire raccordé à l'entrée supplémentaire pour filtrer un fluide hydraulique provenant de l'entrée supplémentaire, la sortie du filtre supplémentaire étant raccordée pour être utilisée pour fournir un fluide hydraulique provenant du filtre supplémentaire au module de commande subaquatique, le procédé comprenant :
le fait de sélectionner si la sortie du circuit hydraulique fournit un fluide hydraulique au module de commande subaquatique depuis le premier filtre ou le filtre supplémentaire ; et
la détection d'une pression de fluide hydraulique en amont du filtre fournissant un fluide hydraulique à la sortie et la détection d'une pression de fluide hydraulique en aval de ce filtre, au niveau de la sortie du filtre le module électronique subaquatique étant adapté pour produire une indication liée à un différentiel de pression de fluide hydraulique à travers celui du premier filtre ou du filtre supplémentaire qui fournit un fluide hydraulique à la sortie.
